# EUROPÄISCHE PATENTSCHRIFT

(11) **EP 3 948 688 B1**
(45) Veröffentlichungstag und Bekanntmachung des Hinweises auf die Patenterteilung: **19.06.2024**
(21) Anmeldenummer: 20714523.6
(22) Anmeldetag: 24.03.2020
(51) Int. Cl.: G06N 3/045, G06N 3/088, G06N 3/09, G06N 3/0464, G06N 3/096

(54) **TRAINING FÜR KÜNSTLICHE NEURONALE NETZWERKE MIT BESSERER AUSNUTZUNG DER LERN-DATENSÄTZE**
TRAINING FOR ARTIFICIAL NEURAL NETWORKS WITH BETTER UTILIZATION OF LEARNING DATA RECORDS
ENTRAÎNEMENT POUR RÉSEAUX NEURONAUX ARTIFICIELS AVEC UNE MEILLEURE UTILISATION DES JEUX DE DONNÉES D'APPRENTISSAGE

(30) Priorität: 26.03.2019 DE 102019204139
(43) Veröffentlichungstag der Anmeldung: 09.02.2022
(73) Patentinhaber: Robert Bosch GmbH, 70442 Stuttgart (DE)
(72) Erfinder: LOU, Zhongyu, 71272 Renningen (DE); NGUYEN, Duc Tam, 76133 Karlsruhe (DE)
(86) Internationale Anmeldenummer: PCT/EP2020/058079
(87) Internationale Veröffentlichungsnummer: WO 2020/193510

(56) Entgegenhaltungen:
- Vithursan Thangarasa ET AL: "Self-Paced Learning with Adaptive Deep Visual Embeddings", , 24. Juli 2018 (2018-07-24), Seiten 1-13, XP055706915, arXiv.org Gefunden im Internet: URL:https://arxiv.org/pdf/1807.09200.pdf [gefunden am 2020-06-19]
- LU JIANG ET AL: "Self-Paced Learning with Diversity", NEURAL INFORMATION PROCESSING SYSTEMS (NIPS) 2014, Bd. 27, 1. Januar 2014 (2014-01-01), Seiten 2078-2086, XP055706933, https://papers.nips.cc/book/advances-in-ne ural-information-processing-systems-27-201 4

## Beschreibung

### Stand der Technik

Das Führen eines Fahrzeugs im öffentlichen Straßenverkehr ist eine komplexe Aufgabe, die eine kontinuierliche Erfassung des Fahrzeugumfelds und eine zeitnahe Reaktion auf das Auftauchen von Objekten, wie etwa Verkehrszeichen, sowie auf das Verhalten anderer Verkehrsteilnehmer erfordert. Voraussetzung für eine korrekte Reaktion ist, dass Objekte und andere Verkehrsteilnehmer korrekt klassifiziert werden, also beispielsweise ein Stoppschild immer als ein Stoppschild erkannt wird.

Um ein Fahrzeug zumindest teilweise automatisiert zu führen, ist es erforderlich, die Klassifikation von Objekten, die der Mensch bereits lange vor der ersten Fahrstunde erlernt, maschinell nachzubilden. Die WO 2018/184 963 A2 offenbart ein Verfahren, mit dem Objekte im Umfeld eines Fahrzeugs mit künstlichen neuronalen Netzen, KNN, erkannt werden können.

Für das Training derartiger KNNs werden Lern-Datensätze benötigt. Jeder dieser Lern-Datensätze enthält beispielhafte Werte (Samples) von Eingangsgrößen, also Bilder, des KNN sowie diejenigen Werte der Ausgangsgrößen (Labels), auf die das KNN diese Eingangsgrößen idealerweise abbilden sollte. Ein Sample kann beispielsweise ein Bild sein, das zumindest einen Teil des Umfelds des Fahrzeugs zeigt Die zugehörigen Labels können beispielsweise die Objekte angeben, die in der im Bild gezeigten Szenerie vorhanden sind.

(V. Thangarasa et al., "Self-Paced Learning with Adaptive Deep Visual Embeddings", arXiv: 1807.09200v1 (2018)) offenbart ein Verfahren zum Trainieren eines neuronalen Netzwerks, bei dem der jeweils nächste Minibatch von Trainings-Beispielen nach ihrer aktuellen Wichtigkeit für das weitere Training ausgewählt wird. Diese Wichtigkeit richtet sich sowohl nach der Leichtigkeit im Hinblick auf den Kreuzentropie-Loss als auch nach der Diversität der Trainings-Beispiele.

(L. Jiang et al., "Self-Paced Learning with Diversity", Neural Information Processing Systems (NIPS) 2014, Band 27, Seiten 2078-2086) offenbart ein weiteres Verfahren zum Trainieren eines neuronalen Netzwerks, das den Lernprozess von Menschen und Tieren nachbildet, indem zunächst mit einfachen Trainings-Beispielen begonnen und dann zu komplexeren Trainings-Beispielen vorangeschritten wird. Dabei wird auch die Diversität der Trainings-Beispiele berücksichtigt.

### Offenbarung der Erfindung

Die Erfindung ist in den unabhängigen Patentansprüchen definiert. Die abhängigen Patentansprüche definieren bevorzugte Ausführungsformen.

Im Rahmen der Erfindung wurde ein Verfahren nach Anspruch 1 entwickelt. Das KNN kann vorzugsweise ein faltendes neuronales Netzwerk (Englisch: "convolutional neural network") sein. Die Lern-Datensätze umfassend jeweils ein Sample, also ein Bild, das Werte von Eingangsgrößen des KNN repräsentiert, sowie ein zugehöriges Label, das Werte einer oder mehrerer Ausgangsgrößen des KNN repräsentiert. Dabei können das Sample und das Label jeweils von beliebiger Dimensionalität sein, d.h. in beliebigen Räumen leben. Beispielsweise lebt ein Bild mit einer vorgegebenen Anzahl von Pixeln und Farb- oder Grauwerten je Pixel im Raum aller verschiedenen Bilder, die sich mit dieser Anzahl von Pixeln und Farb- oder Grauwerten darstellen lassen. Ein Label kann beispielsweise diejenigen Objekte angeben, die in der im Bild dargestellten Szenerie vorhanden sind. Dabei ist der Detaillierungsgrad beliebig wählbar. Das Label kann beispielsweise Wahrscheinlichkeiten oder Konfidenzen dafür angeben, dass Objekte bestimmter Klassen in der Szenerie vorhanden sind. Das Label kann aber auch beispielsweise angeben, wie viele solche Objekte in der Szenerie vorhanden sind, und/oder wo sich diese in der Szenerie befinden. D.h. eine Klassifikation kann ein Detektieren von Objekten umfassen, und eine semantische Segmentierung des Bils.

Bei dem Verfahren wird das KNN anhand der in den Lern-Datensätzen enthaltenen Samples unüberwacht trainiert. "Unüberwacht" bedeutet, dass das Training nicht darauf gerichtet ist, dass das KNN bei Eingabe des Samples möglichst das zugehörige vorgegebene Label reproduziert. Vielmehr ist ein derartiges Training darauf gerichtet, allgemein Muster und sonstige Zusammenhänge in den Samples zu erkennen.

Das unüberwachte Training kann beispielsweise in gleicher Weise wie das überwachte Training auf die Optimierung einer Kostenfunktion gerichtet sein. Der Unterschied ist, dass die Kostenfunktion für das unüberwachte Training nicht von einem Vergleich mit bekannten Labels abhängt, sondern andere Kriterien misst. Beispielsweise kann das unüberwachte Training auf eine Aufteilung der Samples in eine vorgegebene Anzahl k von Clustern ausgerichtet sein, wobei die zu minimierende Kostenfunktion dann beispielsweise von der Summe der quadrierten Abweichungen von den Cluster-Schwerpunkten abhängen kann ("kmeans clustering").

Es kann auch beispielsweise aus mehreren Iterationen des KNN während des Trainings ein gleitender Mittelwert als "Lehrer" ermittelt werden, beispielsweise indem Gewichte oder andere Parameter, die das Verhalten des KNN charakterisieren, elementweise über die mehreren Iterationen gemittelt werden. Das Training der aktuellen Iteration des KNN als "Schüler" kann dann beispielsweise mit einer Kostenfunktion erfolgen, die sowohl von der Übereinstimmung der Gewichte oder anderen Parameter mit denen des "Lehrers" als auch von der Übereinstimmung der Verteilungen der Ausgangsgrößen von "Schüler" und "Lehrer" abhängt ("mean teacher model").

Anhand mindestens eines Gütekriteriums für die Verlässlichkeit und/oder Qualität der Zuordnung von Labels zu Samples in den Lern-Datensätzen wird eine Gewichtung der Lern-Datensätze ermittelt. Unter Berücksichtigung dieser Gewichtung wird das KNN anhand der in den Lern-Datensätzen enthaltenen Samples und zugehörigen Labels überwacht trainiert. "Überwacht" bedeutet, dass das KNN zumindest im Mittel bei Eingabe eines Samples eine Ausgangsgröße ausgeben sollte, die nahe am vorgegebenen Label liegt.

Dabei gibt die Gewichtung an, wie stark sich der jeweilige Lern-Datensatz auf das überwachte Training auswirken soll. Beispielsweise kann die Gewichtung auf einer reellwertigen Skala zwischen 0 und 1 angegeben sein. Ein Wert von 1 bedeutet dann, dass der Lern-Datensatz in vollem Umfang beim überwachten Training berücksichtigt wird. Ein Wert von 0 bedeutet, dass der Lern-Datensatz überhaupt nicht in das überwachte Training eingeht, sondern nur für das unüberwachte Training verwendet wird.

Es wurde erkannt, dass es beim überwachten Training häufig einen Zielkonflikt zwischen der Bereitstellung einer hinreichenden Menge an Lern-Datensätzen einerseits und der Gewährleistung der Datenqualität andererseits gibt. So werden beispielsweise für die sichere Klassifikation von Objekten in Szenerien aus dem Straßenverkehr 100.000 Lern-Datensätze oder mehr benötigt. Die Samples lassen sich vergleichsweise einfach erfassen, beispielsweise indem eine an einem Fahrzeug montierte Kamera während einer Messfahrt fortwährend Bilder aufzeichnet. Der Engpass liegt in der Erzeugung der zugehörigen Labels. Die Hauptquelle, aus der hier geschöpft wird, ist menschliche Arbeit. Das heißt, eine Vielzahl von Menschen bekommt eine Vielzahl von Bildern vorgesetzt mit der Aufgabe, beispielsweise zu klassifizieren, welche Bildpixel zu welcher Art von Objekt gehören.

Diese Arbeit wird häufig auf Grund enger Kostenvorgaben pro Lern-Datensatz als Akkordarbeit unter Zeitdruck ausgeführt. Hierunter kann die Genauigkeit leiden. Gerade bei der Verteilung der Arbeit auf eine Vielzahl von Bearbeitern kann es weiterhin zwischen den Bearbeitern eine Variabilität geben, die die Genauigkeit weiter verringert. Wirft beispielsweise ein Fahrzeug auf der Fahrbahn einen Schatten, so kann der eine Bearbeiter den Schatten als zum Fahrzeug gehörig klassifizieren, da er ja durch das Fahrzeug verursacht wurde, während der andere Bearbeiter den Schatten richtigerweise als zur Fahrbahn gehörig klassifiziert. Auch kann beispielsweise der Detaillierungsgrad, mit der eine Baumkrone oder ein ähnliches komplexes Objekt segmentiert wird, von Bearbeiter zu Bearbeiter unterschiedlich sein.

Weiterhin kann auch die Qualität der Rohdaten ein begrenzender Faktor für die Genauigkeit der Labels sein. Beispielsweise kann bei schlechten Sichtverhältnissen oder einer ungünstigen Beobachtungsperspektive die Grenze zwischen zwei Objekten schwer auszumachen sein.

Indem die Lern-Datensätze nun anhand des Gütekriteriums für die Verlässlichkeit und/oder Qualität der Zuordnung von Labels zu Samples gewichtet werden und zugleich die Samples aller Lern-Datensätze unabhängig von der Qualität der jeweiligen Labels beim unüberwachten Training berücksichtigt werden, kann insgesamt eine vorgegebene Menge an Lern-Datensätzen besser ausgenutzt werden.

Hierunter ist insbesondere zu verstehen, dass die Berücksichtigung aller Lern-Datensätze beim unüberwachten Training den durch die Nicht-Berücksichtigung einiger Lern-Datensätze beim überwachten Training zumindest teilweise ausgleicht. Es wird also die Notwendigkeit vermindert, als Ersatz für auf Grund des Gütekriteriums untergewichtete oder gar nicht berücksichtigte Lern-Datensätze neue Lern-Datensätze zuzuführen.

Dabei besteht völlige Flexibilität dahingehend, wie die Ergebnisse des unüberwachten Trainings und des überwachten Trainings zu einem Endergebnis zusammengeführt werden.

Beispielsweise kann ein und dasselbe KNN im Wechsel unüberwacht und überwacht trainiert werden. Das Verhalten des KNN kann beispielsweise durch einen Satz Gewichte oder anderer Parameter charakterisiert sein, die im Wechsel durch das unüberwachte Training und durch das überwachte Training geändert werden. Diese Vorgehensweise ist vergleichbar mit der Erstellung eines Gemäldes durch zwei Maler, die sich an der Staffelei abwechseln. Das Abwechseln ist eine Möglichkeit, wie eine Selbstkonsistenz zwischen dem Ergebnis des unüberwachten Lernens einerseits und dem Ergebnis des überwachten Lernens andererseits hergestellt werden kann. Beide Ergebnisse sollten sich idealerweise ergänzen, jedoch sollten sie sich nicht widersprechen, da sie im Kern auf den gleichen Samples basieren.

Alternativ oder auch in Kombination hierzu kann eine erste Instanz des KNN unüberwacht trainiert werden, während eine hiervon unabhängige zweite Instanz des KNN überwacht trainiert wird. Die beiden Instanzen können dann zu einem Gesamtergebnis zusammengeführt werden.

Beispielsweise können die Gewichte oder anderen Parameter der beiden Instanzen des KNN gemittelt oder nach einer anderen Vorschrift miteinander verrechnet werden. Das Zusammenführen kann aber auch beispielsweise auf die konkrete mit dem KNN zu lösende Aufgabe zugeschnitten sein. Beispielsweise kann bei einem KNN, das Objekte im Umfeld eines fahrenden Fahrzeugs klassifizieren soll, eine besonders wichtige Anforderung sein, dass schwächere Verkehrsteilnehmer (wie Fußgänger oder Radfahrer) unter allen Umständen erkannt werden, weil Kollisionen mit solchen schwächeren Verkehrsteilnehmern besonders folgenschwer sind. Das Zusammenführen kann dann beispielsweise nach einer Vorschrift erfolgen, die jedwedem Anzeichen dafür, dass bestimmte Bildpixel einem schwächeren Verkehrsteilnehmer zuzuordnen sind, oberste Priorität einräumt.

In einer weiteren besonders vorteilhaften Ausgestaltung wird beim überwachten Training des KNN die zusätzliche Randbedingung, dass ein Ergebnis des überwachten Trainings konsistent mit einem Ergebnis des unüberwachten Trainings ist, berücksichtigt. Diese Randbedingung kann beispielsweise als zusätzlicher Term in die Loss-Funktion (Kostenfunktion) des überwachten Trainings aufgenommen werden. Wie zuvor erläutert, ist ein allzu starkes Auseinanderentwickeln der Ergebnisse der beiden Trainings physikalisch unplausibel, da beide Trainings auf den gleichen Rohdaten basieren.

In einer weiteren besonders vorteilhaften Ausgestaltung wird die Gewichtung mit einem zusätzlichen KNN ermittelt, das auf die Beurteilung des Gütekriteriums trainiert ist. Beim Training dieses zusätzlichen KNN können beispielsweise vollständige Lern-Datensätze des letztendlich zu trainierende KNN, d.h. Paarungen aus Samples und zugehörigen Labels, als Samples verwendet werden. Jedes dieser Samples kann dann dahingehend gelabelt sein, inwieweit die Zuordnung des Labels zu dem Sample in dem jeweiligen Lern-Datensatz zutreffend ist.

Das Ermitteln der Gewichtung mit dem zusätzlichen KNN bietet maximale Flexibilität hinsichtlich des Gütekriteriums. Insbesondere kann auch ein Gütekriterium, das schwer in eine geschlossene Formel zu fassen ist, in organischer Weise berücksichtigt werden.

In einer weiteren besonders vorteilhaften Ausgestaltung wird zum Ermitteln der Gewichtung eine zusätzliche Filterungsinstanz des KNN anhand der in den Lern-Datensätzen enthaltenen Samples und Labels überwacht trainiert. Das Sample eines jeden Lern-Datensatzes wird der Filterungsinstanz als Eingabe zugeführt, und die von der Filterungsinstanz gelieferte Ausgabe wird mit dem Label des Lern-Datensatzes verglichen. Die Gewichtung des Lern-Datensatzes wird anhand des Ergebnisses dieses Vergleichs ermittelt. Die Übereinstimmung der Ausgabe der Filterung mit dem Label des Lern-Datensatz bildet also das Gütekriterium.

Das Ermitteln der Gewichtung kann beispielsweise beinhalten, dass ein Lern-Datensatz in Antwort darauf, dass die Filterungsinstanz sein tatsächliches Label nicht als das zutreffendste Label ermittelt hat, untergewichtet wird. Dieses Untergewichten kann insbesondere beinhalten, den Lern-Datensatz beim überwachten Lernen vollständig unberücksichtigt zu lassen.

Hierhinter steckt die Überlegung, dass die Filterungsinstanz zumindest im Mittel eine Ausgabe liefern sollte, die im Einklang mit dem Label des jeweiligen Lern-Datensatzes steht, denn genau dies ist ja das Ziel, auf das die Filterungsinstanz trainiert wurde. Wenn es für einzelne Lern-Datensätze deutliche Abweichungen gibt, sind prinzipiell zwei Ursachen denkbar. Zum einen kann bei der Zuordnung des Labels zu dem Sample in dem Lern-Datensatz ein Fehler aufgetreten sein, d.h., trotz klar erkennbarer Sachlage kann eine unzutreffende Zuordnung vorgenommen worden sein. Zum anderen kann aus dem Sample des Lern-Datensatzes ungewöhnlich schwer zu erkennen sein, welches Label diesem Sample korrekterweise zugeordnet werden sollte. Beides ist jeweils ein sinnvoller Grund dafür, den Lern-Datensatz unterzugewichten.

In einer weiteren besonders vorteilhaften Ausgestaltung wird die Filterungsinstanz des KNN mit der anhand des Ergebnisses des Vergleichs ermittelten Gewichtung erneut trainiert. Im Anschluss können dann wieder die Samples der Lern-Datensätze dieser erneut trainierten Filterungsinstanz als Eingabe zugeführt werden, so dass die jeweilige Ausgabe der Filterungsinstanz in Antwort auf ein Sample erneut mit dem zu diesem Sample gehörigen Label verglichen werden und die Gewichtung des Lern-Datensatzes anhand dieses Vergleichs verfeinert werden kann.

Insbesondere können die Samples aller verfügbaren Lern-Datensätze der erneut trainierten Filterungsinstanz als Eingabe zugeführt werden, obwohl bei diesem erneuten Training der Filterungsinstanz auf Grund der zuvor ermittelten Gewichtung nur noch eine Auswahl der Lern-Datensätze zum Einsatz gekommen ist. In Antwort darauf, dass die Filterungsinstanz für ein bestimmtes ungewöhnlich schwer zu erkennendes Sample nicht das richtige Label ermitteln konnte, war es richtig, den entsprechenden Lern-Datensatz beim weiteren Training der Filterungsinstanz zunächst unterzugewichten oder gar nicht mehr heranzuziehen. Jedoch ist es kein unabänderliches Schicksal, dass die Filterungsinstanz nicht in der Lage ist, das Sample dieses Lern-Datensatzes korrekt zu interpretieren. Vielmehr ist es durchaus möglich, dass die Filterungsinstanz bei weiteren Iterationen des Trainings ihre Fähigkeiten so weit verbessert, dass sie schließlich auch den ursprünglich "zu schwierigen" Lern-Datensatz korrekt interpretieren kann.

Als Analogon zur Veranschaulichung mag der Lateinunterricht dienen, in dem der Schüler jeweils einen lateinischen Text ins Deutsche zu übersetzen hat. Wenn ein Neuling sich an der Originallektüre römischer Kaiser versucht, kann die Kluft zwischen dem tatsächlichen Ergebnis und dem richtigen Ergebnis so groß sein, dass sich hieraus kein sinnvoller Hinweis ableiten lässt, was der Schüler konkret besser machen sollte. Mit anderen Worten, der Text besteht nur aus Mängeln, und beim Versuch, hieraus zu lernen, werden die Mängel noch schlimmer. Es ist dann sinnvoll, wenn der Schüler die Originallektüre erst einmal ad acta legt und sich den speziell für die Heranführung an die Sprache konstruierten Übungsstücken in seinem Lehrbuch widmet. Wenn der Schüler eine hinreichende Anzahl Übungsstücke bearbeitet hat, werden seine nächsten Übersetzungen der Originallektüre Mängel nur noch in einem solchen Umfang enthalten, dass er aus ihnen lernen und seine Sprachkenntnisse perfektionieren kann.

In einer weiteren besonders vorteilhaften Ausgestaltung wird anhand einer Menge von Validierungs-Datensätzen, die jeweils ein Sample und ein zugehöriges Label enthalten, geprüft, ob die Filterungsinstanz durch das erneute Trainieren verbessert wurde. Eine Verbesserung liegt dann vor, wenn die Filterungsinstanz nach dem erneuten Trainieren den Samples der Validierungs-Datensätze im Mittel mit einer größeren Genauigkeit die zugehörigen Labels der Validierungs-Datensätze zuordnet als vor dem erneuten Training. Wenn das erneute Training in dieser Hinsicht keine Verbesserung darstellt, wird das Ergebnis des erneuten Trainierens verworfen. Der bisherige Zustand der Filterungsinstanz ist dann der Endzustand.

Auf diese Weise kann der Punkt erkannt werden, ab dem das Training der Filterungsinstanz in das sogenannte Overfitting abgleitet. Overfitting bedeutet, dass das Training sich zu sehr an den Samples der Lern-Datensätze orientiert und zu wenig auf neue Situationen verallgemeinerbar ist. Im übertragenen Sinne werden die Lern-Datensätze "auswendig gelernt", statt, dass die in ihnen steckende Erkenntnis tatsächlich "verstanden" wird.

Vorteilhaft ist die Menge der Validierungs-Datensätze disjunkt zur Menge der Lern-Datensätze. Jeder Validierungs-Datensatz ist dann in maximalem Maße ein "unabhängiger Beobachter" für die Beurteilung, ob Overfitting vorliegt.

Vorteilhaft werden Lern-Datensätze gewählt, deren Samples physikalische Messdaten umfassen, die mit mindestens einem ersten Sensor aufgenommen wurden. Im Vergleich zu künstlich erzeugten Samples, die beispielsweise mit einem Generative Adversarial Network (GAN) erzeugt wurden, sind Samples mit physikalischen Messdaten aufwändiger zu beschaffen. Der zuvor beschriebene Vorteil, dass der Informationsgehalt einer vorgegebenen Menge an Lern-Datensätzen optimal ausgenutzt werden kann, kommt dann in besonderem Maße zum Tragen.

In einer weiteren besonders vorteilhaften Ausgestaltung werden Validierungs-Datensätze gewählt, deren Samples physikalische Messdaten umfassen, die mit mindestens einem zweiten Sensor aufgenommen wurden. Dieser zweite Sensor ist von dem ersten Sensor verschieden. Er ist in Bezug auf die Messgenauigkeit, auf die Messempfindlichkeit, und/oder auf den Dynamikumfang, höherwertig als der erste Sensor.

Auf diese Weise kann eine größere Menge an Samples für Lern-Datensätze zu vergleichsweise geringen Kosten je Sample mit einem oder mehreren Sensoren vom Typ des ersten Sensors erfasst werden. Lediglich eine vergleichsweise kleine Menge an Samples für Validierungs-Datensätze wird dann mit einem oder mehreren Sensoren vom Typ des zweiten Sensors zu höheren Kosten je Sample erfasst. Der Endzustand, in dem das KNN für die konkrete Anwendung fertig trainiert ist, wird somit mit geringeren Gesamtkosten für die physikalische Aufnahme von Samples erreicht.

In einer weiteren besonders vorteilhaften Ausgestaltung werden Validierungs-Datensätze mit Labels gewählt, die im Vergleich zu den Labels der Lern-Datensätze mit einer in Bezug auf die Genauigkeit und/oder Verlässlichkeit höherwertigen Methode gewonnen wurden. Dann muss die höherwertige Methode, die möglicherweise höhere Kosten je Label verursacht, nur für eine vergleichsweise geringe Menge Validierungs-Datensätze angewendet werden. Die Labels für die Lern-Datensätze können dann zu geringeren Kosten je Label beschafft werden, so dass bei gleichem Gesamtaufwand insgesamt eine größere Menge an Lern-Datensätzen generiert werden kann.

Beispielsweise können die Labels für die Validierungs-Datensätze durch einen ausgewiesenen Experten gesetzt werden, der ihm als Samples vorgelegte Bilder zunächst aufwändig mit kontrastverstärkenden Programmen und anderen Werkzeugen nachbearbeitet, bevor er sie eingehend begutachtet. Die Labels für die Lern-Datensätze können hingegen von angelernten Kräften, etwa im Rahmen eines Crowdsourcings, in einem Schnellverfahren anhand des ersten Anscheins des unbearbeiteten Bildes gesetzt werden.

Wie zuvor erläutert, ist das Endergebnis des Trainings gemäß dem beschriebenen Verfahren, dass das KNN ausgehend von einer gegebenen Menge Lern-Datensätze, sowie optional zusätzlich ausgehend von einer gegebenen Menge Validierungs-Datensätze, bei der Abbildung physikalischer Messdaten auf eine Klassifikation, bessere Ergebnisse liefert als ein herkömmlich trainiertes KNN. Somit bezieht sich die Erfindung auf ein KNN, das zur Erfüllung dieser Aufgabe ausgebildet ist und mit dem beschriebenen Verfahren trainiert wurde. Dass ein gegebenes KNN auf diese Weise trainiert wurde, lässt sich anhand der Netzwerkarchitektur nachweisen, die durch die das Verhalten des KNN charakterisierenden Gewichte festgelegt ist.

Allgemein bezieht sich die Erfindung noch auf ein weiteres Verfahren. Bei diesem Verfahren wird zunächst ein künstliches neuronales Netzwerk, KNN, mit dem zuvor beschriebenen Trainingsverfahren trainiert. Das KNN wird betrieben, indem ihm eine oder mehrere Eingangsgrößen zugeführt werden. Abhängig von den vom KNN gelieferten Ausgangsgrößen wird ein Fahrzeug, ein Roboter, ein Qualitätskontrollsystem, und/oder ein System zur Überwachung eines Bereichs auf der Basis von Sensordaten, angesteuert.

Wie zuvor erläutert, sind mit dem zuvor beschriebenen Trainingsverfahren trainierte KNN besonders vorteilhaft für Steuerungsaufgaben einsetzbar, die auf einer Klassifikation von Eingabedaten basieren. Bei diesen Anwendungen tritt die Knappheit von Trainingsdaten, und/oder der hohe Kostenaufwand für die Beschaffung einer hinreichenden Menge von Trainingsdaten, besonders deutlich zu Tage, und Rauschen in den Labels wird in besonderem Maße verstärkt. Daher bezieht sich die Erfindung auch auf ein System mit dem beschriebenen KNN und einer Steuereinheit, die dazu ausgebildet ist, die Ausgabe des KNN in ein Ansteuersignal für mindestens einen Aktor eines Fahrzeugs, einer Anlage für die automatische optische Inspektion und/oder einer Robotersteuerung umzusetzen. Der Eingang des KNN ist mit mindestens einem Sensor, der physikalische Messdaten liefert, verbindbar. Der Ausgang der Steuereinheit ist mit dem jeweiligen Aktor verbindbar.

Das Verfahren ist computerimplementiert. Daher bezieht sich die Erfindung auch auf ein Computerprogramm nach Anspruch 11. Ebenso bezieht sich die Erfindung auch auf einen maschinenlesbaren Datenträger nach Anspruch 12.

Weiterhin bezieht sich die Erfindung auch auf einen Computer, ein Steuergerät und/oder ein Embedded-System nach Anspruch 13.

Weitere, die Erfindung verbessernde Maßnahmen werden nachstehend gemeinsam mit der Beschreibung bevorzugter Ausführungsbeispiele der Erfindung anhand von Figuren näher dargestellt.

### Ausführungsbeispiele

Es zeigt:
Figur 1 Erstes Ausführungsbeispiel des Verfahrens 100 mit Training unabhängiger Instanzen 1a und 1b des KNN 1;
Figur 2 Zweites Ausführungsbeispiel des Verfahrens 100 mit abwechselndem überwachtem und unüberwachtem Training ein und desselben KNN 1;
Figur 3 Ausführungsbeispiel des Systems 50;
Figur 4 Experimentelle Resultate zur Veranschaulichung der Vorteile des Verfahrens 100.

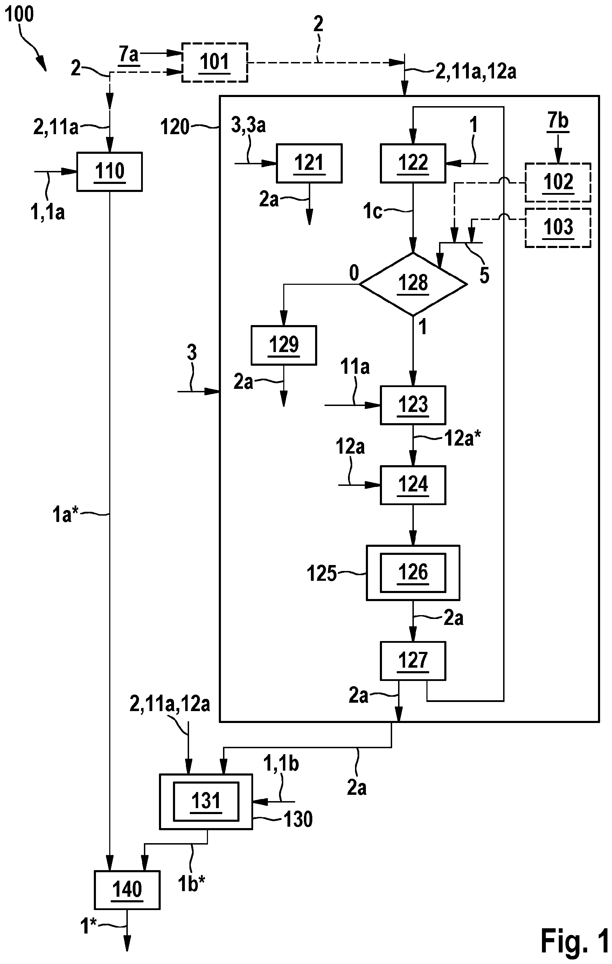

Figur 1 zeigt ein erstes Ausführungsbeispiel des Verfahrens 100. In diesem Ausführungsbeispiel wird eine erste Instanz 1a des KNN 1 in Schritt 110 unüberwacht trainiert, wobei alle Samples 11a der vorhandenen Lern-Datensätze 2 zum Einsatz kommen. Der trainierte Zustand dieser ersten Instanz 1a ist mit dem Bezugszeichen 1a* bezeichnet.

Unabhängig hiervon wird in Schritt 130 eine zweite Instanz 1b des KNN 1 überwacht trainiert. Hierbei werden neben den Samples 11a auch die Labels 12a aus den Lern-Datensätzen 2 herangezogen. Dabei werden die Lern-Datensätze 2 jedoch der in Schritt 120 anhand des Gütekriteriums 3 ermittelten Gewichtung 2a unterzogen. Dies hat typischerweise zur Folge, dass nur eine Teilmenge der Lern-Datensätze 2 in das überwachte Training 130 eingeht. Der trainierte Zustand der zweiten Instanz 1b des KNN 1 ist mit dem Bezugszeichen 1b* bezeichnet.

Optional wird beim überwachten Training 130 gemäß Block 131 die zusätzliche Randbedingung berücksichtigt, dass ein Ergebnis des überwachten Trainings 130 konsistent ist mit einem Ergebnis des unüberwachten Trainings 110.

Innerhalb des Kastens 120 sind zwei verschiedene Möglichkeiten für die Gewinnung der Gewichtung 2a beispielhaft dargestellt.

Gemäß Block 121 kann ein zusätzliches KNN 3a, das auf die Beurteilung des Gütekriteriums 3 trainiert ist, die Gewichtung 2a ermitteln.

Es kann jedoch auch eine zusätzliche Filterinstanz 1c des KNN 1 genutzt werden, um die Gewichtung 2a zu ermitteln. In dem in Figur 1 gezeichneten Beispiel wird die Filterinstanz 1c iterativ trainiert unter Zuhilfenahme von Validierungs-Datensätzen 5.

Gemäß Block 122 wird die Filterungsinstanz 1c des KNN 1 anhand von Samples 11a und Labels 12a aus den Lern-Datensätzen 2 überwacht trainiert. In der ersten Iteration kommen hierbei alle Lern-Datensätze 2 zum Einsatz. Danach bestimmt die in jeder Iteration ermittelte Gewichtung 2a, welche Lern-Datensätze 2 in der nächsten Iteration berücksichtigt werden.

Gemäß Block 123 wird das Sample 11a eines jeden Lern-Datensatzes 2 der Filterungsinstanz 1c als Eingabe zugeführt. Die von der Filterungsinstanz 1c gelieferte Ausgabe 12* wird gemäß Block 124 mit dem Label 12a des Lern-Datensatzes 2 verglichen, und die Gewichtung 2a des Lern-Datensatzes 2 wird gemäß Block 125 anhand des Ergebnisses dieses Vergleichs 124 ermittelt. Dies kann gemäß Block 126 beispielsweise bedeuten, dass in Antwort darauf, dass die Filterungsinstanz 1c des KNN 1 das tatsächliche Label 12a eines Lern-Datensatzes 2 nicht als das zutreffendste Label 12a* ermittelt hat, dieser Lern-Datensatz 2 untergewichtet oder gar nicht mehr berücksichtigt wird. Dabei kann das "zutreffendste Label" beispielsweise dasjenige Label sein, dem die Filterungsinstanz 1c einen maximalen Score und/oder eine maximale Wahrscheinlichkeit zuordnet.

Gemäß Block 127 wird die Filterungsinstanz 1c des KNN anhand der Gewichtung 2a, die in Block 125 ermittelt wurde, erneut trainiert, d.h., es wird die nächste Iteration gestartet.

Ab der zweiten Iteration wird nach dem überwachten Training der Filterungsinstanz 1c in Block 122 gemäß Block 128 geprüft, ob die Filterungsinstanz 1c nach dem erneuten Training auf einer Menge von Validierungs-Datensätzen 5 eine bessere Leistung zeigt als vor diesem erneuten Training. Die Leistung ist dann besser, wenn den Samples 11a der Validierungs-Datensätze 5 im Mittel mit einer größeren Genauigkeit die zugehörigen Labels 12a der Validierungs-Datensätze 5 zugeordnet werden.

Ist die Leistung besser (Wahrheitswert 1 bei Block 128), wird wie bei der ersten Iteration mit dem Block 123 fortgefahren. Ist die Leistung nicht besser (Wahrheitswert 0), wird dies gemäß Block 129 dahingehend gewertet, dass Overfitting einsetzt. Das Ergebnis des erneuten Trainings wird dann verworfen, und es wird die anhand der letzten Version der Filterungsinstanz 1c ermittelte Gewichtung 2a als Endergebnis gewertet.

Es kann weiterhin noch eine Abbruchbedingung für eine maximale Anzahl von Iterationen vorgegeben werden.

Gemäß dem optionalen Schritt 101 können solche Lern-Datensätze gewählt werden, deren Samples 11a physikalische Messdaten umfassen, die mit mindestens einem ersten Sensor 7a aufgenommen wurden.

Gemäß dem optionalen Schritt 102 können Validierungs-Datensätze 5 gewählt werden, deren Samples 11a physikalische Messdaten umfassen, die mit einem im Vergleich zum ersten Sensor 7a höherwertigen physikalischen Sensor 7b aufgenommen wurden.

Gemäß dem optionalen Schritt 103 können Validierungs-Datensätze 5 gewählt werden, deren Labels 12a mit einer im Vergleich zur Gewinnung der Labels 12a der Lern-Datensätze 2 höherwertigen (und damit in der Regel aufwändigeren) Methode gewonnen wurden.

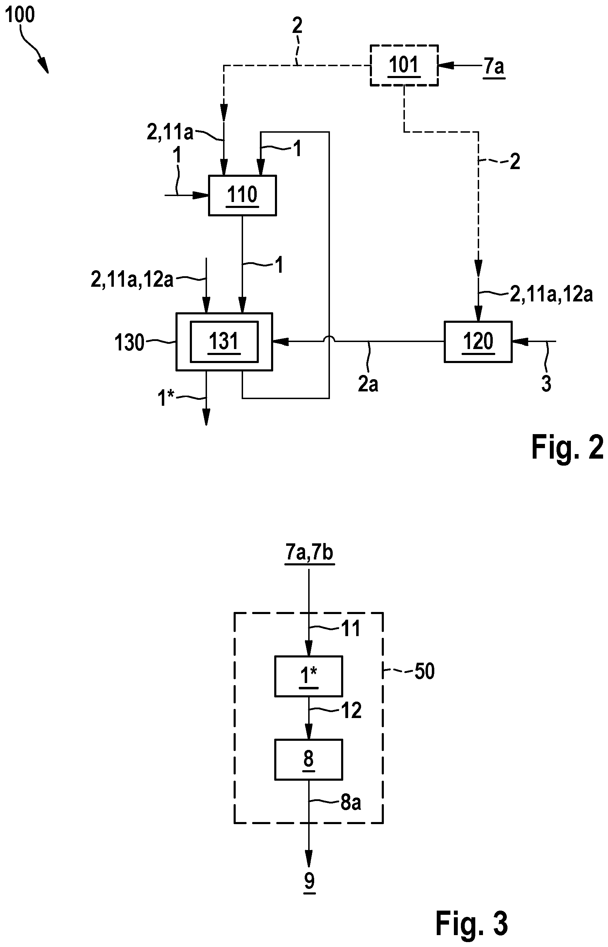

Figur 2 zeigt ein weiteres Ausführungsbeispiel des Verfahrens 100. Im Unterschied zu Figur 1 finden das unüberwachte Training 110 und das überwachte Training 130 hier im Wechsel statt. Das heißt, beide Trainings wirken auf ein und dasselbe KNN 1, d.h., beispielsweise auf ein und denselben Satz Gewichte oder anderer Parameter, der dieses KNN 1 charakterisiert. Das überwachte Training 130 geschieht analog zu Figur 1 auf der Grundlage einer in Schritt 120 ermittelten Gewichtung 2a der Lern-Datensätze 2. Wie zuvor erläutert, kann diese Gewichtung 2a insbesondere besagen, dass nur eine Teilmenge der Lern-Datensätze 2 für das überwachte Training 130 verwendet wird.

Das Ermitteln 120 der Gewichtung 2a kann insbesondere auch mit den in Figur 1 illustrierten Methoden erfolgen. Diese sind aus Gründen der Übersichtlichkeit in Figur 2 nicht noch einmal eingezeichnet.

Figur 3 zeigt ein Ausführungsbeispiel des Systems 50. Das System 50 umfasst das KNN 1 in seinem trainierten Zustand 1* sowie eine Steuereinheit 8. Der Eingang des KNN 1* ist mit mindestens einem Sensor 7a, 7b verbindbar, der physikalische Messdaten als Eingabe 11 an das KNN 1* liefert. Die Ausgabe 12 des KNN 1* wird von der Steuereinheit 8 in ein Ansteuersignal 8a für den Aktor 9 umgesetzt.

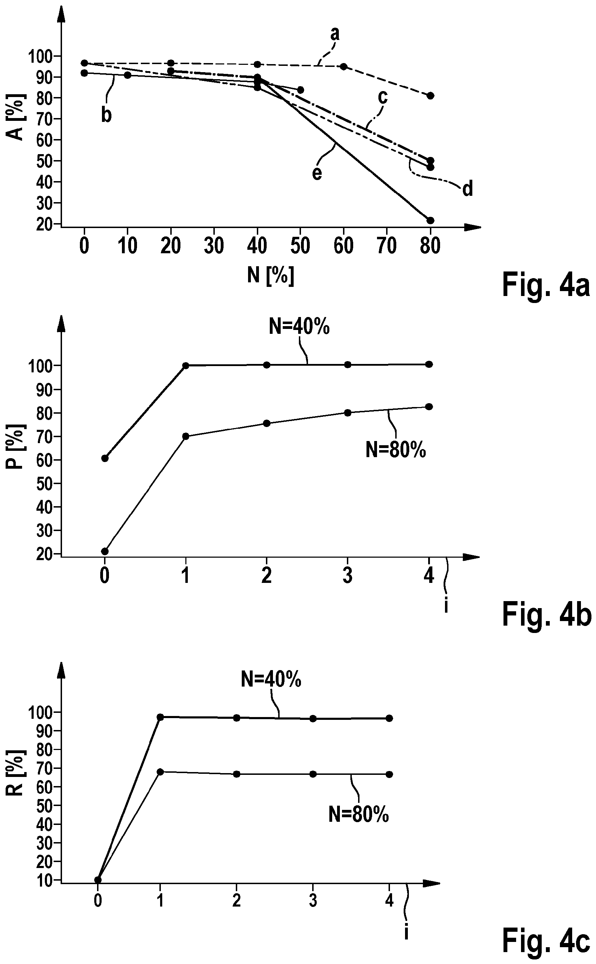

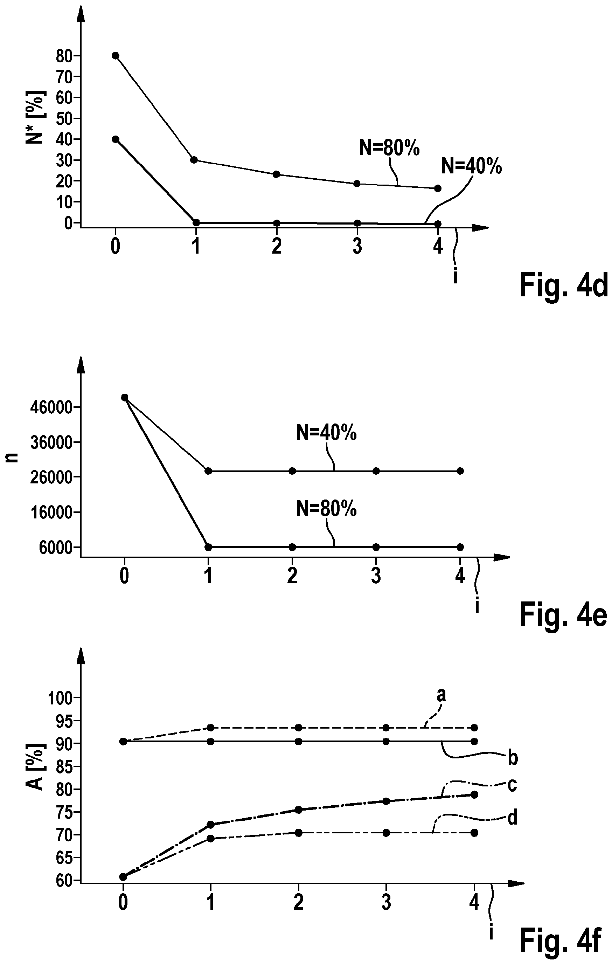

Figur 4 zeigt einige experimentelle Resultate, die die Vorteile des Verfahrens 100 veranschaulichen.

Figur 4a zeigt Ergebnisse eines Versuchs, bei dem die Bilder des CIFAR-10 Datensatzes mit dem trainierten KNN 1* klassifiziert wurden. Dabei wurde ein Prozentsatz N der Labels 12a der Lern-Datensätze 2 verfälscht. In Figur 4a ist die erzielte Genauigkeit A der Klassifikation über dem Prozentsatz N der verfälschten Labels 12a aufgetragen. Der Kurve a liegt ein Training mit dem beschriebenen Verfahren 100 zu Grunde. Den Kurven b, c, d und e liegen Trainings mit anderen Verfahren nach dem Stand der Technik zu Grunde.

Tendenziell ist es der Genauigkeit A immer abträglich, wenn ein größerer Prozentsatz N der Labels 12a verfälscht wird. Dies zeigt sich beim Training gemäß dem Verfahren 100 (Kurve a) jedoch erst ab einem deutlich höheren Prozentsatz N als bei den anderen Verfahren (Kurven b-e). Auch fällt der Verlust an Genauigkeit A selbst bei N=80 % verfälschten Labels 12a deutlich geringer aus als bei den anderen Verfahren. Ursache hierfür ist zum einen, dass die in dem Verfahren 100 verwendete Gewichtung 2a der Lern-Datensätze 2 den Einfluss verfälschter Labels 12a wirksam zurückdrängt. Zum anderen wird durch das unüberwachte Training 110 auch aus Lern-Datensätzen 2 mit unbrauchbaren Labels 12a noch Information gewonnen.

Figur 4b zeigt für ein zwei verschiedene Prozentsätze (N=40 % und N=80 %) verfälschter Labels 12a die Präzision P (englischer Fachbegriff: "precision") der Klassifikation, die nach einem Training mit der in Figur 1 skizzierten Ausführungsform des Verfahrens 100 erzielt werden konnte. Die Präzision P gibt an, welcher Prozentsatz der Bilder des CIFAR-10 Datensatzes, den das KNN 1* einer bestimmten Klasse zugeordnet hat, in Wahrheit dieser Klasse angehört.

Beim Training 100 des KNN 1 zur Erzielung des letztendlichen Zustandes 1* wurden die Labels 12a, die für das überwachte Training 130 verwendet werden, iterativ gefiltert. In Figur 4b ist die Präzision P über der Anzahl i der Iterationen aufgetragen. Den größten Gewinn bringt die erste Iteration; danach steigt die Präzision P deutlich langsamer. Der Gewinn ist tendenziell für größere Prozentsätze N an verfälschten Labels größer.

Ein ähnliches Bild zeigt sich bei der Auftragung der Empfindlichkeit R (englischer Fachbegriff: "recall") für das gleiche Experiment in Figur 4c. Die Empfindlichkeit R gibt an, welchen Prozentsatz der tatsächlich zu jeder Klasse gehörenden Bilder das trainierte KNN 1* der jeweiligen Klasse zugeordnet hat.

Die Figuren 4d und 4e zeigen weitere Details des Trainingsfortschritts. Figur 4d zeigt, wie der Prozentsatz N* an Labels 12a, die beim Ermitteln 120 der Gewichtung 2a als verfälscht identifiziert werden, von einer Iteration i zur nächsten abnimmt. Figur 4e zeigt, wie viele Labels 12a gemäß der Gewichtung 2a in jeder Iteration i noch berücksichtigt werden, d.h., wie viele Lern-Datensätze 2 noch für das überwachte Training 130 verwendet werden.

Figur 4f verdeutlicht den Vorteil, den es bringt, die Filterung der Labels 12a in jeder Iteration i ausgehend von der Gesamtmenge aller verfügbaren Labels 12a vorzunehmen, d.h., auch zunächst verworfene Labels 12a in späteren Iterationen wieder zuzulassen. Aufgetragen ist jeweils die Genauigkeit A der Klassifikation, wiederum gemessen am CIFAR-10 Datensatz. Die Kurven a und b wurden mit einem Prozentsatz N=60 % an verfälschten Labels 12a ermittelt, die Kurven c und d mit einem Prozentsatz N=80 % an verfälschten Labels 12a.

Den Kurven a und c liegt jeweils das zuvor beschriebene Training zu Grunde, bei dem zunächst verworfene Labels 12a später wieder berücksichtigt werden. Den Kurven b und d liegt jeweils ein vereinfachtes Training zu Grunde, bei dem einmal verworfene Labels 12a in keiner weiteren Iteration i mehr berücksichtigt wurden. Figur 4f zeigt, dass dieses endgültige Verwerfen von Labels 12a der letztendlich erzielten Genauigkeit A abträglich ist, da ein Teil der in den Labels 12a enthaltenen Information ungenutzt bleibt.

## Patentansprüche

1. Computerimplementiertes Verfahren (100) zum Trainieren eines als Bildklassifikators ausgebildeten künstlichen neuronalen Netzwerks, KNN (1), mit Lern-Datensätzen (2), die jeweils ein Sample (11a) und ein zugehöriges Label (12a) umfassen, wobei jedes Sample (11a) Werte einer oder mehrerer Eingangsgrößen (11) des KNN (1) repräsentiert und das zugehörige Label (12a) Werte einer oder mehrerer Ausgangsgrößen (12) des KNN (1) repräsentiert, mit den Schritten:
• das KNN (1) wird anhand der in den Lern-Datensätzen (2) enthaltenen Samples (11a) unüberwacht trainiert (110), wobei das unüberwachte Training auf eine Aufteilung der Samples in eine vorgegebene Anzahl k von Clustern ausgerichtet ist;
• anhand mindestens eines Gütekriteriums (3) für die Verlässlichkeit und/oder Qualität der Zuordnung von Labels (12a) zu Samples (11a) in den Lern-Datensätzen (2) wird eine Gewichtung (2a) der Lern-Datensätze (2) ermittelt (120);
• unter Berücksichtigung dieser Gewichtung (2a) wird das KNN (1) anhand der in den Lern-Datensätzen (2) enthaltenen Samples (11a) und zugehörigen Labels (12a) überwacht trainiert (130),
wobei
• ein von dem KNN (1) zu klassifizierendes Bild Pixel aufweist, denen jeweils Farb- oder Grauwerte zugeordnet sind, und
• das KNN (1) dazu ausgebildet ist, auf der Basis dieser Pixel Objekte in dem Bild zu detektieren, und/oder das Bild semantisch zu segmentieren,
und wobei
• ein und dasselbe KNN (1) im Wechsel unüberwacht (110) und überwacht (130) trainiert wird, und/oder
• eine erste Instanz (1a) des KNN (1) unüberwacht trainiert wird (110), eine zweite Instanz (1b) des KNN (1) mit gleicher Architektur überwacht trainiert wird (130) und die beiden trainierten Instanzen (1a*, 1b*) zu einem Gesamtergebnis (1*) zusammengeführt werden (140).

2. Verfahren (100) nach Anspruch 1, wobei beim überwachten Training (130) des KNN (1) die zusätzliche Randbedingung, dass ein Ergebnis des überwachten Trainings (130) konsistent mit einem Ergebnis des unüberwachten Trainings (110) ist, berücksichtigt wird (131).

3. Verfahren (100) nach einem der Ansprüche 1 bis 2, wobei die Gewichtung (2a) mit einem zusätzlichen KNN (3a) ermittelt wird (121), das auf die Beurteilung des Gütekriteriums (3) trainiert ist.

4. Verfahren (100) nach einem der Ansprüche 1 bis 3, wobei zum Ermitteln (120) der Gewichtung (2a)
• eine zusätzliche Filterungsinstanz (1c) des KNN (1) anhand der in den Lern-Datensätzen (2) enthaltenen Samples (11a) und Labels (12a) überwacht trainiert wird (122),
• das Sample (11a) eines jeden Lern-Datensatzes (2) der Filterungsinstanz (1c) als Eingabe zugeführt wird (123),
• die von der Filterungsinstanz (1c) gelieferte Ausgabe (12a*) mit dem Label (12a) des Lern-Datensatzes (2) verglichen wird (124), und
• die Gewichtung (2a) des Lern-Datensatzes (2) anhand des Ergebnisses dieses Vergleichs (124) ermittelt wird (125).

5. Verfahren (100) nach Anspruch 4, wobei ein Lern-Datensatz (2) in Antwort darauf, dass die Filterungsinstanz (1c) sein tatsächliches Label (12a) nicht als das zutreffendste Label (12a*) ermittelt hat, untergewichtet wird (126).

6. Verfahren (100) nach einem der Ansprüche 4 bis 5, wobei die Filterungsinstanz (1c) des KNN (1) mit der anhand des Ergebnisses des Vergleichs (124) ermittelten (125) Gewichtung (2a) erneut trainiert wird (127).

7. Verfahren (100) nach Anspruch 6, wobei
• anhand einer Menge von Validierungs-Datensätzen (5), die jeweils ein Sample (11a) und ein zugehöriges Label (12b) enthalten, geprüft wird (128), ob die Filterungsinstanz (1c) durch das erneute Trainieren (127) dahingehend verbessert wurde, dass sie den Samples (11a) der Validierungs-Datensätze (5) im Mittel mit einer größeren Genauigkeit die zugehörigen Labels (12a) der Validierungs-Datensätze (5) zuordnet, und
• das Ergebnis des erneuten Trainierens (127) verworfen wird (129), wenn es sich in dieser Hinsicht nicht als Verbesserung erweist.

8. Verfahren (100) nach einem der Ansprüche 1 bis 7, wobei Lern-Datensätze (2) gewählt werden (101), deren Samples (11a) physikalische Messdaten umfassen, die mit mindestens einem ersten Sensor (7a) aufgenommen wurden.

9. Verfahren (100) nach Anspruch 7 und 8, wobei Validierungs-Datensätze (5) gewählt werden (102), deren Samples (11a) physikalische Messdaten umfassen, die mit mindestens einem zweiten Sensor (7b) aufgenommen wurden, wobei der zweite Sensor (7b) in Bezug auf die Messgenauigkeit, auf die Messempfindlichkeit, und/oder auf den Dynamikumfang, höherwertig ist als der erste Sensor (7a) und somit höhere Kosten je Sample (11a) verursacht, und/oder
wobei Validierungs-Datensätze (5) mit Labels (12a) gewählt werden (103), die im Vergleich zu den Labels (12a) der Lern-Datensätze (2) mit einer in Bezug auf die Genauigkeit und/oder Verlässlichkeit höherwertigen Methode, und somit zu höheren Kosten je Label (12a), gewonnen wurden.

10. Computerimplementiertes Verfahren mit den Schritten:
• ein Bildklassifikator, insbesondere ein künstliches neuronales Netzwerk, KNN (1), wird mit dem Verfahren (100) nach einem der Ansprüche 1 bis 9 trainiert;
• der Bildklassifikator (1) wird betrieben, indem ihm eine oder mehrere Eingangsgrößen (11) zugeführt werden;
• abhängig von den vom Bildklassifikator (1) gelieferten Ausgangsgrößen (12) wird ein Fahrzeug, ein Roboter, ein Qualitätskontrollsystem, und/oder ein System zur Überwachung eines Bereichs auf der Basis von Sensordaten, angesteuert.

11. Computerprogramm, enthaltend maschinenlesbare Anweisungen, die, wenn sie auf einem oder mehreren Computern, und/oder auf einem Steuergerät, und/oder auf einem Embedded-System, ausgeführt werden, den oder die Computer, das Steuergerät, bzw. das Embedded-System dazu veranlassen, das Verfahren (100) nach einem der Ansprüche 1 bis 9 auszuführen.

12. Maschinenlesbarer Datenträger mit dem Computerprogramm nach Anspruch 11.

13. Computer, Steuergerät und/oder Embedded-System mit dem jeweils hierzu korrespondierenden Computerprogramm nach Anspruch 11, und/oder mit dem jeweils hierzu korrespondierenden maschinenlesbaren Datenträger nach Anspruch 12.

## Claims

1. Computer-implemented method (100) for training an artificial neural network, ANN (1), designed as an image classifier, with learning datasets (2) that each comprise a sample (11a) and an associated label (12a), wherein each sample (11a) represents values of one or more input variables (11) of the ANN (1) and the associated label (12a) represents values of one or more output variables (12) of the ANN (1), comprising the following steps:
• the ANN (1) is trained without supervision (110) based on the samples (11a) contained in the learning datasets (2), wherein the unsupervised training is aimed at dividing the samples into a predefined number k of clusters;
• a weighting (2a) of the learning datasets (2) is ascertained (120) based on at least one quality criterion (3) for the reliability and/or quality of the assignment of labels (12a) to samples (11a) in the learning datasets (2) ;
• taking this weighting (2a) into consideration, the ANN (1) is trained with supervision (130) based on the samples (11a) and associated labels (12a) contained in the learning datasets (2),
wherein
• an image to be classified by the ANN (1) contains pixels each of which is assigned colour values or grayscale values, and
• the ANN (1) is designed to detect objects in the image on the basis of these pixels, and/or to semantically segment the image, and wherein
• one and the same ANN (1) is trained alternately without supervision (110) and with supervision (130), and/or
• a first instance (1a) of the ANN (1) is trained without supervision (110), a second instance (1b) of the ANN (1) having the same architecture is trained with supervision (130), and both trained instances (1a*, 1b*) are combined (140) to give an overall result (1*).

2. Method (100) according to Claim 1, wherein, during the supervised training (130) of the ANN (1), the additional constraint whereby a result of the supervised training (130) is consistent with a result of the unsupervised training (110) is taken into consideration (131) .

3. Method (100) according to either of Claims 1 and 2, wherein the weighting (2a) is ascertained (121) using an additional ANN (3a) that is trained to assess the quality criterion (3).

4. Method (100) according to one of Claims 1 to 3, wherein, in order to ascertain (120) the weighting (2a),
• an additional filtering instance (1c) of the ANN (1) is trained with supervision (122) based on the samples (11a) and labels (12a) contained in the learning datasets (2),
• the sample (11a) of each learning dataset (2) is supplied (123) to the filtering instance (1c) as input,
• the output (12a*) delivered by the filtering instance (1c) is compared (124) with the label (12a) of the learning dataset (2), and
• the weighting (2a) of the learning dataset (2) is ascertained (125) based on the result of this comparison (124) .

5. Method (100) according to Claim 4, wherein a learning dataset (2) is under-weighted (126) in response to the filtering instance (1c) not having ascertained its actual label (12a) as the most suitable label (12a*).

6. Method (100) according to either of Claims 4 and 5, wherein the filtering instance (1c) of the ANN (1) is retrained (127) using the weighting (2a) ascertained (125) based on the result of the comparison (124).

7. Method (100) according to Claim 6, wherein
• a check is carried out (128), based on a set of validation datasets (5) each containing a sample (11a) and an associated label (12a), as to whether the filtering instance (1c) has been improved by the retraining (127) such that, on average, it assigns the associated labels (12a) in the validation sets (5) to the samples (11a) in the validation datasets (5) with greater accuracy, and
• the result of the retraining (127) is discarded (129) if there does not turn out to be an improvement in this regard.

8. Method (100) according to one of Claims 1 to 7, wherein learning datasets (2) are selected (101) the samples (11a) of which comprise physical measured data that were recorded using at least one first sensor (7a).

9. Method (100) according to Claims 7 and 8, wherein validation datasets (5) are selected (102) the samples (11a) of which comprise physical measured data that were recorded using at least one second sensor (7b), wherein the second sensor (7b) is of higher quality in terms of measurement accuracy, measurement sensitivity and/or dynamic range than the first sensor (7a), and thus entails higher costs per sample (11a), and/or
wherein validation datasets (5) containing labels (12a) are selected (103) the labels of which were obtained using a higher-quality method in terms of accuracy and/or reliability compared to the labels (12a) of the learning datasets (2), and thus at higher costs per label (12a).

10. A computer-implemented method, comprising the following steps:
• an image classifier, in particular an artificial neural network, ANN (1), is trained using the method (100) according to one of Claims 1 to 9;
• the image classifier (1) is operated by supplying it with one or more input variables (11);
• a vehicle, a robot, a quality control system, and/or a system for monitoring a region on the basis of sensor data is controlled on the basis of the output variables (12) delivered by the image classifier (1).

11. Computer program containing machine-readable instructions that, when they are executed on one or more computers, and/or on a controller, and/or on an embedded system, cause the one or more computers, the controller and/or the embedded system, respectively, to carry out the method (100) according to one of Claims 1 to 9.

12. Machine-readable data carrier containing the computer program according to Claim 11.

13. Computer, controller and/or embedded system having the computer program, respectively corresponding thereto, according to Claim 11 and/or having the machine-readable data carrier, respectively corresponding thereto, according to Claim 12.

## Revendications

1. Procédé (100) mis en œuvre par ordinateur pour l'entraînement d'un réseau neuronal artificiel, KNN (1), réalisé sous la forme d'un classificateur d'images, comprenant des jeux de données d'apprentissage (2), qui comportent chacun un échantillon (11a) et une étiquette (12a) associée, dans lequel chaque échantillon (11a) représente des valeurs d'une ou plusieurs grandeurs d'entrée (11) du KNN (1) et l'étiquette associée (12a) représente des valeurs d'une ou plusieurs grandeurs de sortie (12) du KNN (1), comprenant les étapes suivantes :
• le KNN (1) subit un entraînement non supervisé (110) à l'aide des échantillons (11a) contenus dans les jeux de données d'apprentissage (2), l'entraînement non supervisé étant orienté vers une répartition des échantillons en un nombre prédéfini k de groupements ;
• une pondération (2a) des jeux de données d'apprentissage (2) est déterminée (120) à l'aide d'au moins un critère de qualité (3) pour la fiabilité et/ou la qualité de l'association d'étiquettes (12a) à des échantillons (11a) dans les jeux de données d'apprentissage (2) ;
• en tenant compte de cette pondération (2a), le KNN (1) subit un entraînement supervisé (130) à l'aide des échantillons (11a) et des étiquettes (12a) associées contenus dans les jeux de données d'apprentissage (2), dans lequel
• une image devant être classifiée par le KNN (1) comporte des pixels auxquels sont respectivement associées des valeurs de couleur ou de gris, et
• le KNN (1) est conçu pour détecter, sur la base de ces pixels, des objets dans l'image et/ou pour segmenter sémantiquement l'image, et dans lequel
• un seul et même KNN (1) subit en alternance un entraînement non supervisé (110) et un entraînement supervisé (130), et/ou
• une première instance (1a) du KNN (1) subit un entraînement non supervisé (110), une seconde instance (1b) du KNN (1) ayant la même architecture subit un entraînement supervisé (130) et les deux instances entraînées (1a*, 1b*) sont réunies (140) en un résultat global (1*).

2. Procédé (100) selon la revendication 1, dans lequel, lors de l'entraînement supervisé (130) du KNN (1), la condition limite supplémentaire selon laquelle un résultat de l'entraînement supervisé (130) est cohérent avec un résultat de l'entraînement non supervisé (110) est prise en compte (131).

3. Procédé (100) selon l'une quelconque des revendications 1 à 2, dans lequel la pondération (2a) est déterminée (121) au moyen d'un KNN supplémentaire (3a) qui est entraîné pour évaluer le critère de qualité (3).

4. Procédé (100) selon l'une quelconque des revendications 1 à 3, dans lequel, pour déterminer (120) la pondération (2a),
• une instance de filtrage (1c) supplémentaire du KNN (1) est entraînée (122) de manière supervisée à l'aide des échantillons (11a) et des étiquettes (12a) contenus dans les jeux de données d'apprentissage (2),
• l'échantillon (11a) de chaque jeu de données d'apprentissage (2) est envoyé (123) en entrée à l'instance de filtrage (1c),
• la sortie (12a*) délivrée par l'instance de filtrage (1c) est comparée (124) à l'étiquette (12a) du jeu de données d'apprentissage (2), et
• la pondération (2a) du jeu de données d'apprentissage (2) est déterminée (125) sur la base du résultat de cette comparaison (124).

5. Procédé (100) selon la revendication 4, dans lequel un jeu de données d'apprentissage (2) est soumis à une sous-pondération (126) en réponse au fait que l'instance de filtrage (1c) n'a pas déterminé son étiquette (12a) réelle comme étant l'étiquette (12a*) la plus pertinente.

6. Procédé (100) selon l'une quelconque des revendications 4 à 5, dans lequel l'instance de filtrage (1c) du KNN (1) est réentraînée (127) avec la pondération (125) déterminée (2a) sur la base du résultat de la comparaison (124).

7. Procédé (100) selon la revendication 6, dans lequel,
• sur la base d'une quantité de jeux de données de validation (5) qui contiennent chacun un échantillon (11a) et une étiquette associée (12b), il est vérifié (128) si l'instance de filtrage (1c) a été améliorée par le réentraînement (127) en ce sens qu'elle associe en moyenne avec une plus grande précision aux échantillons (11a) des jeux de données de validation (5) les étiquettes (12a) associées des jeux de données de validation (5), et
• le résultat du réentraînement (127) est rejeté (129) s'il ne se révèle pas être une amélioration à cet égard.

8. Procédé (100) selon l'une quelconque des revendications 1 à 7, dans lequel on sélectionne (101) des jeux de données d'apprentissage (2) dont les échantillons (11a) comprennent des données de mesure physiques qui ont été acquises par au moins un premier capteur (7a).

9. Procédé (100) selon les revendications 7 et 8, dans lequel on sélectionne (102) des jeux de données de validation (5) dont les échantillons (11a) comprennent des données de mesure physiques qui ont été acquises par au moins un second capteur (7b), le second capteur (7b) étant de qualité supérieure au premier capteur (7a) en ce qui concerne la précision de mesure, la sensibilité de mesure, et/ou la gamme dynamique, et entraînant ainsi un coût plus élevé par échantillon (11a), et/ou
dans lequel on sélectionne (103) des jeux de données de validation (5) ayant des étiquettes (12a) qui, par comparaison aux étiquettes (12a) des jeux de données d'apprentissage (2), ont été obtenues par une méthode de qualité supérieure en ce qui concerne la précision et/ou la fiabilité, et entraînant ainsi un coût plus élevé par étiquette (12a).

10. Procédé mis en œuvre par ordinateur comprenant les étapes suivantes :
• un classificateur d'images, en particulier un réseau neuronal artificiel, KNN (1), est entraîné par le procédé (100) selon l'une quelconque des revendications 1 à 9 ;
• le classificateur d'images (1) est utilisé en lui fournissant une ou plusieurs grandeurs d'entrée (11) ;
• en fonction des grandeurs de sortie (12) délivrées par le classificateur d'images (1), on commande un véhicule, un robot, un système de contrôle de qualité et/ou un système de destiné à surveiller une zone sur la base de données de capteurs.

11. Programme informatique contenant des instructions lisibles par machine qui, lorsqu'elles sont exécutées sur un ou plusieurs ordinateurs, et/ou sur un appareil de commande, et/ou sur un système embarqué, amènent respectivement le ou les ordinateurs, l'appareil de commande ou le système embarqué, à mettre en œuvre le procédé (100) selon l'une quelconque des revendications 1 à 9.

12. Support de données lisible par machine, comprenant le programme informatique selon la revendication 11.

13. Ordinateur, appareil de commande et/ou système embarqué comprenant le programme d'ordinateur correspondant selon la revendication 11, et/ou comprenant le support de données lisible par machine correspondant selon la revendication 12.
